Europäisches Patentamt

European Patent Office

Office européen des brevets

(19)

(11) Veröffentlichungsnummer : **0 041 075**
**B1**

(12)

# EUROPÄISCHE PATENTSCHRIFT

(45) Veröffentlichungstag der Patentschrift :
20.04.83

(51) Int. Cl.³ : **H 04 N   3/18**

(21) Anmeldenummer : **80103100.6**

(22) Anmeldetag : **04.06.80**

(54) **Schaltnetzteil in einem Fernsehgerät.**

(43) Veröffentlichungstag der Anmeldung :
**09.12.81 Patentblatt 81/49**

(45) Bekanntmachung des Hinweises auf die Patenterteilung : **20.04.83 Patentblatt 83/16**

(84) Benannte Vertragsstaaten :
**AT BE CH DE FR GB IT LI LU NL SE**

(56) Entgegenhaltungen :
**FUNKSCHAU, Band 44, Heft 11, Juni 1972, München, DE, K. TETZNER : « Nur wenige neue Fernsehempfänger », Seiten 373-375**

**FUNKSCHAU, Band 44, Heft 12, Juni 1972, München, DE, RIECHMANN : « Ein neuer 110o-Farb-
fernsehempfänger  mit  Halbleiterbestückung »,
Seiten 417-420**

(73) Patentinhaber : **LOEWE OPTA GMBH
Industriestrasse 11 Postfach 220
D-8640 Kronach (DE)**

(72) Erfinder : **Kraus, Heinz
Im Schulgarten 1
D-8643 Küps-Theisenort (DE)**

Jouve, 18, rue St-Denis, 75001 Paris, France

EP 0 041 075 B1

Schaltnetzteil in einem Fernsehgerät

Die Erfindung bezieht sich auf ein Schaltnetzteil in einem Fernsehgerät zur Energieversorgung der Horizontalablenkschaltung mit einer Speicherinduktivität, deren Spule an einer Gleichstromquelle angeschlossen ist, und deren gespeicherte Energie in einen Kondensator mittels eines elektronischen Schaltelementes transferiert wird, dessen Schaltzeiten in Abhängigkeit von der Betriebsspannung und/oder der Wirkbelastung durch die angeschlossenen Geräteschaltungen in Abhängigkeit von einer vom Ausgang des Schaltnetzteils oder der Horizontalablenkschaltung abgegriffenen Spannung derart gesteuert werden, daß die Ausgangsspannung konstant ist, wobei die Spule mindestens einen Abgriff aufweist, von dem eine Betriebsspannung abgreifbar ist.

Derartige Schaltnetzteile sind z. B. aus der Firmenschrift von Fairchild « Journal of Semiconductors », Volume 7, N° 2, März/April 1979, Seiten 19 bis 25, bekannt. Man unterscheidet dabei drei Ausführungsformen von Schaltnetzteilen, die in den Fig. 1, 2 und 3 dargestellt sind : das abwärts regelnde Schaltnetzteil (step-down-Generator), Fig. 1, das aufwärts regelnde Schaltnetzteil (step-up-Generator), Fig. 2, und das Umkehr-Schaltnetzteil (inverse-Generator), Fig. 3.

Alle Schaltnetzteile weisen je ein elektronisches Schaltelement 1 auf, das in Reihe mit einer Speicherspule 2 geschaltet ist. Durch Schließen des elektronischen Schaltelementes 1 fließt in die Speicherspule 2 von der angeschlossenen Gleichstromquelle $U_{B1}$ ein Strom. In Abhängigkeit von der Stromflußzeit wird eine bestimmte Energie gespeichert. Mit dem Öffnen des elektronischen Schaltelementes 1 (sperrend) fließt in die Speicherspule 2 kein Strom mehr ; die gespeicherte Energie wird über die jeweilige Diode 3 in den nachgeschalteten Ladekondensator 4, der am Ausgang des Schaltnetzteiles liegt, transferiert. Die Strom-/Spannungskennlinien weichen je nach der Schaltungsausführung gemäß den Fig. voneinander ab. Sie sind im einzelnen in der zitierten Firmenschrift dargestellt. Da sie auf den Erfindungsgegenstand keinen Einfluß haben, wird auf eine nähere Beschreibung verzichtet.

Über das elektronische Schaltelement 1 wird die Stromflußzeit, in der die Speicherspule 2 an die Betriebsspannungsquelle angeschlossen ist, gesteuert. Dadurch wird die Ausgangsspannung des Schaltnetzteiles auf einen konstanten Wert hingeregelt. Es ist bekannt, diese Steuerung in Abhängigkeit von der Betriebsspannung und der Wirkbelastung der angeschlossenen Horizontalablenkschaltung durchzuführen, zu welchem Zweck als Regelinformation eine Spannung von der Ablenkschaltung abgegriffen und in eine Sägezahnspannung umgewandelt und mit einer Referenzspannung in einem Schwellenwertschalter verglichen wird, der einen Steuerimpuls zum Öffnen und Schließen des elektronischen Schaltelementes bei Über- bzw. Unterschreiten des Vergleichsspannungswertes durch die Sägezahnspannung abgibt. Für die Funktion ist es notwendig, daß nach dem Öffnen (Sperren) des elektronischen Schaltelementes durch ein weiteres Signal dieses wieder geschlossen wird (leitend), um einen Strom in die Speicherspule fließen lassen zu können. Zu diesem Zweck ist ein Oszillator vorgesehen, der die entsprechende Ansteuerung übernimmt. Eine andere Regelschaltung sieht vor, daß über eine Steuerlogik der elektronische Schalter von einem Oszillator leitend geschaltet wird, der Abschaltzeitpunkt jedoch von der Regelgröße durch Vergleich mit einer Referenzspannung bestimmt ist.

Die Stromversorgung der übrigen Geräteschaltungen wird entweder von einem Netztransformator oder durch Spannungsteilung vom Ausgang des Schaltnetzteiles abgegriffen. Der Wirkungsgrad des Schaltnetzteiles wird jedoch herabgesetzt, wenn die Betriebsspannungen für die Geräteschaltungen durch Spannungsteilung aus der Ausgangsspannung gewonnen werden. Zwecks Vermeidung der relativ hohen Verlustleistung werden die Betriebsspannungen von dem Netztransformator oder einem gesonderten Transformator abgegriffen, gleichgerichtet und, soweit sie stabilisiert sein müssen, durch aufwendige Schaltungen stabilisiert. Es versteht sich von selbst, daß auch hier ein sehr hoher Aufwand an Bauteilen notwendig ist, um die übrigen Geräteschaltungen mit Strom zu versorgen.

Ausgehend von einem Schaltnetzteil eingangs beschriebener Art in einem Fernsehempfangsgerät, bei dem die Ausgangsspannung bereits durch eine Regelinformation, die vom Verbraucher abgegriffen wird, konstant geregelt wird, liegt der Erfindung die Aufgabe zugrunde, die übrigen Geräteversorgungsspannungen von einem solchen Punkt des Schaltnetzteiles abzugreifen, an dem die einzelnen Betriebsspannungen transformatorisch geteilt und geregelt sind, ohne daß der Wirkungsgrad des Schaltnetzteiles sich dadurch wesentlich ändert. Die Verlustleistungen sollen ferner gering gehalten werden, ohne daß für die Erzeugung der einzelnen Betriebsspannungen ein gesonderter Transformator notwendig ist.

Die Aufgabe wird erfindungsgemäß nach der im Anspruch 1 wiedergegebenen technischen Lehre gelöst.

Die durch die Erfindung erreichten Vorteile sind im wesentlichen darin zu sehen, daß lediglich ein oder mehrere Abgriffe an der Spule der Speicherinduktivität vorzusehen sind, von denen die Spannungen abgegriffen werden, die nach Gleichrichtung mittels Verdopplerschaltungen als geregelte Betriebsspannungen den Verbraucherschaltungen zugeführt werden. Durch die kapazitive Kopplung mittels eines Entkoppelkondensators wird sichergestellt, daß bei Ausfall der Taktfrequenz des Schaltnetzteiles die Versorgungsspannungen nicht auf den Wert der Ausgangsspannungen ansteigen, die größer sein können als die Versorgungsspannungen. Würde die kapazitive Entkopplung nicht erfolgen, so könnte die Betriebsspannung nicht aufrechterhalten werden, und die Geräteschaltungen würden nicht mehr arbeiten. Über die Speicherinduktivität kann nach der Lehre der Erfindung die Betriebsspannung für die einzelnen Geräteschaltungen, wie Tonendstufen, Vertikalablenkstufen, Videoteil und andere Geräteschaltungen, abgegriffen werden.

Es ist bereits bekannt, einen Abgriff an der Speicherinduktivität vorzusehen und von diesem eine Triggerspannung zur Ansteuerung des elektronischen Schaltelementes abzugreifen. Dabei erfolgt keine kapazitive Entkopplung der Gleichrichterschaltung für diese Betriebsspannung, so daß die anliegende Spannung stets den Betriebsspannungsschwankungen unterworfen ist. Ohne Beachtung der Lehre der Erfindung kann hier keine Betriebsspannung für die Geräteschaltungen abgegriffen werden.

Erst durch die Erfindung ist es möglich, die Betriebsspannungen ohne einen Mehraufwand für die übrigen Geräteschaltungen ebenfalls zu stabilisieren. Lediglich die vom ersten Abgriff abgegriffene Spannung, der dem Eingang der Spule am nächsten liegt, unterliegt den Spannungsschwankungen, da dieser Abgriff der Bezugspunkt für die Regelung ist. Es ist deshalb gemäß der Lehre des Anspruchs 3 zu verfahren und an diesen Abgriff einen Verbraucher mit dynamischem Leistungsverhalten anzuschalten.

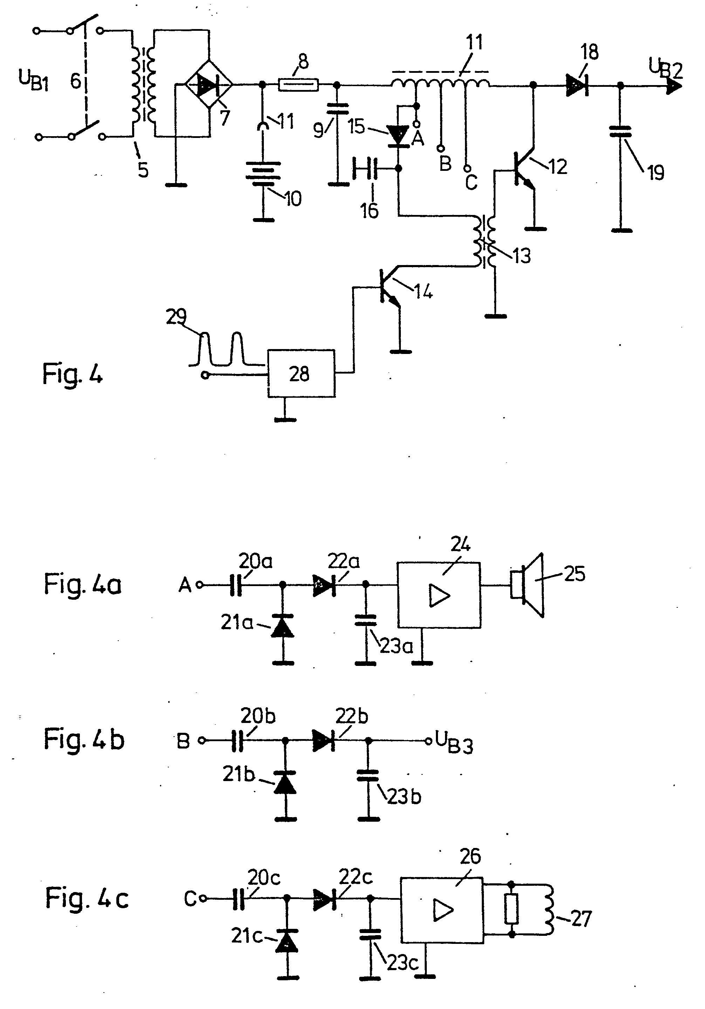

Im folgenden wird die Erfindung anhand der in den Fig. 4, 4a, 4b, 4c dargestellten möglichen Ausführungsformen näher erläutert.

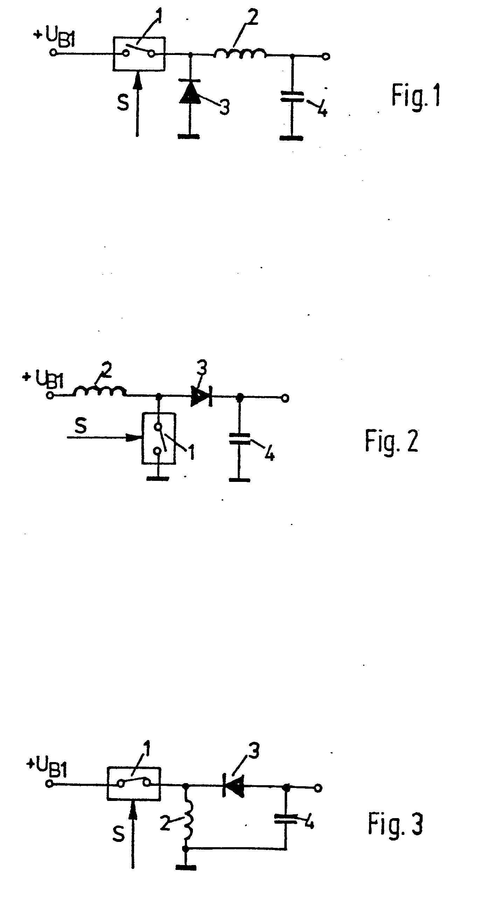

Das Schaltnetzteil in Fig. 4 besteht aus einem Netztransformator 5, der über einen Schalter 6 an ein Wechselspannungsnetz angeschlossen ist. Die Sekundärwicklung des Netztransformators 5 ist mit einem Brückengleichrichter 7 verbunden, der so geschaltet ist, daß er die beiden Halbwellen des Wechselstromes gleichrichtet und eine positive Spannung liefert. Am Ausgang des Brückengleichrichters 7 ist hinter einer nachgeschalteten Sicherung 8 ein gegen Masse geschalteter Ladekondensator 9 angeschlossen. Mittels dieses Ladekondensators 9 wird die anliegende pulsierende Gleichspannung geglättet. Eine Gleichspannungsquelle in Form einer Batterie 10 ist über einen Steckkontakt hinter dem Brückengleichrichter 7 anschließbar. Bei Batteriebetrieb wird die Batterie 10 angeschlossen und der Netzschalter geöffnet. Das eigentliche Schaltnetzteil, das über die Schaltfrequenz die Energiezufuhr regelt, besteht aus einer Längsinduktivität mit einer Spule 11, zu der in Reihe ein npndotierter Schalttransistor 12 gegen Masse geschaltet ist. Dieser Schalttransistor 12 ist mit seinem Kollektor an die Spule 11 angeschlossen und mit seinem Emitter gegen Masse geschaltet. Gesteuert wird er über seine Basis über einen Triggertransformator 13, dessen Primärwicklung an den Kollektor eines Treibertransistors 14 angeschaltet ist, und dessen zweites Ende der Primärwicklung an einer Gleichrichterschaltung aus einem Gleichrichter 15 und einem gegen Masse geschalteten Ladekondensator 16 angeschlossen ist. Der Gleichrichter 15 ist mit seiner Anode an den Abgriff A der Spule 11 angeschlossen. Die über den Gleichrichter 15 anliegende Betriebsspannung für den Treibertransistor 14 wird mit dem Schaltzustand des Treibertransistors 14 geschaltet. Entsprechend werden über den Triggertransformator 13 die Ansteuerimpulse an die Basis des Transistors 12 durchgeschaltet. Angesteuert wird der Treibertransistor 14 von einem Steuerteil 28, das zeilenfrequent die Energieaufnahme regelt. Hierzu liegen Zeilenrücklaufimpulse 29 an einem Steuereingang an. An dem Verbindungspunkt zwischen der Spule 11 und dem Kollektor des Schalttransistors 12 ist mit der Anode eine Diode 18 angeschlossen, die mit der Kathode an einem Ladekondensator 19 liegt, von dem die Betriebsspannung $U_{B2}$ für die Horizontalablenkschaltung abgreifbar ist. Erfindungsgemäß sind an der Spule 11 der Längsinduktivität Abgriffe A, B und C vorgesehen. An diese Abgriffe sind die in den Fig. 4a, b, c dargestellten Verdopplerschaltungen über Entkoppelkondensatoren 20a, b und c angeschlossen. Die Verdopplerschaltungen bestehen aus je einer Klemmdiode 21a, b, c, die mit der Kathode mit dem jeweiligen Entkoppelkondensator 20a, b, c, und mit der Anode gegen Masse geschaltet ist. An dem Verbindungspunkt zwischen dem Entkoppelkondensator 20a, b, c und der Kathode der Klemmdiode 21a, b, c ist je eine Gleichrichterdiode 22a, b, c mit der Anode angeschlossen und mit der Kathode mit je einem Ladekondensator 23a, b, c verbunden. Von diesem Ladekondensator 23a, b, c ist die jeweilige Betriebsspannung abgreifbar. An den Ausgang der Verdopplerschaltung gemäß Fig. 4a ist als dynamischer Verbraucher der NF-Leistungsverstärker 24 der Tonendstufe angeschlossen, die einen Lautsprecher 25 speist. Von dem Ausgang der Verdopplerschaltung gemäß Fig. 4b, die an den Anschluß B angeschlossen ist, sind Gleichspannungen $U_{B3}$ für den Video- und HF-Teil des Gerätes abgreifbar. Von der Verdopplerschaltung gemäß Fig. 4c, die an den Anschluß C angeschlossen ist, ist eine Spannung abgreifbar, die die Vertikalendstufe 26 speist. In der Vertikalendstufe werden die Vertikalablenkströme erzeugt, die durch die Ablenkspule 27 geschickt werden und die vertikale Ablenkung bewirken. Die anliegenden Zeilenimpulse dienen als Regelgröße. Aus den Zeilenrücklaufimpulsen wird eine proportionale Sägezahnspannung erzeugt, die mit einer konstanten Referenzspannung verglichen wird oder aber einen Generator derart steuert, daß an seinem Ausgang proportional der abgegriffenen Regelinformation der Zündzeitpunkt des Schalttransistors 12 vor- oder nachgeschoben wird. Die Wirkungsweise des Schaltnetzteiles ist anhand der Fig. 1 bis 3 eingangs bereits beschrieben. Wird die Spannung, die als Regelinformation abgegriffen wird, größer, so verschiebt sich umgekehrt proportional der Einschaltpunkt derart, daß der Transistor 12 früher leitend wird und damit weniger Energie aus der Speicherinduktivität über die Diode 18 in den Kondensator 19 transferiert wird. Im umgekehrten Fall wird der Transistor 12 später leitend, so daß eine größere Energiemenge in den Kondensator 9 transferiert wird. Dadurch wird die Spannung $U_{B2}$ konstant gehalten. Die aufgenommene Energiemenge der Speicherinduktivität 11 ist dem Umladungsprozeß proportional, so daß von den einzelnen Abgriffen B und C geregelte Spannungen abgreifbar sind. Lediglich vom ersten Abgriff A ist, da der erste Teilspulenspannungsabfall in die Regelung nicht mit eingeht, eine Spannungsschwankung entsprechend der Netzspannungsschwankung gegeben. Aus diesem Grunde muß hier ein dynamischer Verbraucher, z. B. die Ton-NF-Endstufe, angeschlossen werden. Für die Regelung ist die Spannung am Abgriff A Bezugsgröße, da sich der Spannungsabfall zur Ausgangsspannung addiert bzw. subtrahiert bezogen auf die von A abgegriffene Spannung.

Die Wirkungsweise der Verdopplerschaltung mit kapazitiver Ankopplung ist folgende :

Die von den Abgriffen der Speicherspule 11 abgenommenen Spannungen bewirken, daß über die Entkoppelkondensatoren 20a, b, c die positiven Spannungsanteile über die nachgeschalteten Gleichrichterdioden 22a, b, c gleichgerichtet und in den Ladekondensatoren 23a, b, c gespeichert werden. Negative Anteile werden durch die Klemmdioden 21a, b, c bei der Umladung infolge des Zurückgehens der anliegenden Spannungen an den Abgriffen A, B, C auf den Punkt Null gegen Masse abgeleitet. Die Spannung an den Kondensatoren 20a, b, c kann aber nicht die Mindestdifferenzspannung zwischen der Eingangs- und Ausgangsspannung der Spule 11 in dem entsprechenden Teilerverhältnis der Abgriffe unterschreiten. Eine Entladung der Ladekondensatoren 23a, b, c ist ebenfalls nicht möglich, da der Restspannungsanteil die Dioden 22a, b, c nicht in den leitenden Zustand überführt. Die Betriebsspannungen sind also auch bei kurzzeitigem Ausfall der Schaltfrequenzen abgreifbar. Die angeschlossenen Verstärkerstufen 24, 26 sind somit noch voll in Betrieb. Der Ladezustand der Ladekondensatoren 23a, b, c wird mit der nächsten Schaltfrequenz des Schaltnetzteiles wieder auf Nennwert aufgeladen.

Da die Spannungen über mehrere Abgriffe von der Spule 11 entnommen werden, sind diese untereinander transformatorisch entkoppelt. Die Einzelregelung berücksichtigt lediglich den zwischen den einzelnen Abgriffen gegebenen Spannungsabfall, der als Mindestspannung an den Abgriffen A, B, C anliegt.

## Ansprüche

1. Schaltnetzteil in einem Fernsehgerät zur Energieversorgung der Horizontalablenkschaltung mit einer Speicherinduktivität (11), deren Spule an einer Gleichstromquelle angeschlossen ist und deren gespeicherte Energie in einen Kondensator (19) mittels eines elektronischen Schaltelementes (12) transferiert wird, dessen Schaltzeiten in Abhängigkeit von der Betriebsspannung und/oder der Wirkbelastung durch die angeschlossenen Geräteschaltungen in Abhängigkeit von einer vom Ausgang des Schaltnetzteiles oder der Horizontalablenkschaltung abgegriffenen Spannung derart gesteuert werden, daß die Ausgangsspannung ($U_{B2}$) konstant ist, wobei die Spule (11) mindestens einen Abgriff (A, B, C) aufweist, von dem eine Betriebsspannung abgreifbar ist, dadurch gekennzeichnet, daß der Abgriff (A) der Spule oder mehrere vorgesehene Abgriffe (B, C) über je einen Entkoppelkondensator (20a, b, c) mit einer Spannungsverdopplerschaltung aus einer nach Masse geschalteten Klemmdiode (21a, b, c) und einer an einen Ladekondensator (23a, b, c) angeschalteten Gleichrichterdiode (22a, b, c) verbunden sind, von denen unterschiedliche Spannungen abgreifbar sind.

2. Schaltnetzteil nach Anspruch 1, dadurch gekennzeichnet, daß die Klemmdiode (21a, b, c) mit der Anode gegen Masse und mit der Kathode mit dem Entkoppelkondensator (20a, b, c) und der Anode der Gleichrichterdiode (22a, b, c) verbunden ist, die mit der Kathode am Ladekondensator (23a, b, c) angeschlossen ist, von dem die jeweilige Versorgungsspannung abgreifbar ist.

3. Schaltnetzteil nach Anspruch 1 oder 2, dadurch gekennzeichnet, daß an dem dem Eingang der Spule (11) der Speicherduktivität nächstliegenden Abgriff eine Geräteschaltung (24) mit einer dynamischen Last angeschlossen ist.

4. Schaltnetzteil nach einem der vorhergehenden Ansprüche, dadurch gekennzeichnet, daß als Regelinformation für die Spannungsregelung des Schaltnetzteiles eine Spannung von einer der an die Abgriffe der Spule angeschlossenen Geräteschaltungen (24, 26) abgegriffen wird, jedoch nicht von der am dem Spuleneingang nächstliegenden Abgriff (A) angeschlossenen Geräteschaltung mit dynamischer Last.

## Claims

1. Combination mains unit in a television equipment for the energy supply of the horizontal deflection circuit with a storage inductance (11), the coil of which is connected to a source of direct current and the stored energy of is transferred into a capacitor (19) by means of an electronic switching element (12), the switching times of which are controlled in dependence on the operating voltage and/or the active loading by the connected equipment circuits in dependence on a voltage taken off from the output of the combination mains unit or of the horizontal deflection circuit in such a manner that the output voltage ($U_{B2}$) is constant, wherein the coil (11) displays at least one tap (A, B, C), from which an operating voltage can be taken off, characterised thereby, that the tap (A) of the coil or several provided taps (B, C) are connected through a respective decoupling capacitor (20a, b, c) with a voltage doubler circuit of a clamping diode (21a, b, c) connected to ground and a rectifying diode (22a, b, c) connected to a charging capacitor (23a, b, c), from which different voltages can be taken off.

2. Combination mains unit according to claim 1, characterised thereby, that the clamping diode (21a, b, c) is connected by the anode to ground and by the cathode with the decoupling capacitor (20a, b, c) and the anode of the rectifying diode (22a, b, c), which is connected with the cathode at the charging capacitor (23a, b, c), from which the respective supply voltage can be taken off.

3. Combination mains unit according to claim 1 or 2, characterised thereby, that an equipment circuit (24) with a dynamic load is connected to the tap lying nearest to the input of the coil (11) of the storage inductance.

4. Combination mains unit according to one of the preceding claims, characterised thereby, that a voltage from one of the equipment circuits (24, 26) connected to the taps of the coil, but not the equipment circuit with dynamic load connected to the tap (A) lying nearest to the input of the coil, is taken off as regulating information for the voltage regulation of the combination mains unit.

**Revendications**

1. Bloc d'alimentation à commutation dans un téléviseur, servant à alimenter en énergie le circuit de dérivation horizontale, du type comportant une inductance d'emmagasinage (11) dont la bobine est reliée à une source de courant continu et dont l'énergie emmagasinée est transférée à un condensateur (19) au moyen d'un élément électronique de commutation (12) dont les temps de commutation sont commandés, sous la dépendance de la tension de service et/ou de la charge effective, par les circuits raccordés de l'appareil, sous la dépendance d'une tension tirée de la sortie du bloc d'alimentation à commutation ou du circuit de déviation horizontale, de telle sorte que la tension de sortie ($U_{B2}$) est constante, la bobine (11) présentant au moins une prise (A, B, C) de laquelle on peut tirer une tension de service, caractérisé par le fait que la prise (A) ou les prises (B, C) de la bobine sont reliées, chacune par l'intermédiaire d'un condensateur de découplage (20a, 20b, 20c), à un circuit doubleur de tension formé d'une diode de limitation (21a, 21b, 21c) reliée à la masse et d'une diode redresseuse (22a, 22b, 22c) reliée à un condensateur de charge (23a, 23b, 23c), desquels on peut tirer différentes tensions.

2. Bloc d'alimentation à commutation selon la revendication 1, caractérisé par le fait que la diode de limitation (21a, 21b, 21c) est reliée par son anode à la masse et par sa cathode au condensateur de découplage (20a, 20b, 20c) et à l'anode de la diode redresseuse (22a, 22b, 22c) qui est raccordée par sa cathode au condensateur de charge (23a, 23b, 23c) duquel on peut tirer la tension d'alimentation considérée.

3. Bloc d'alimentation à commutation selon l'une des revendications 1 et 2, caractérisé par le fait qu'à la prise la plus proche de l'entrée de la bobine (11) de l'inductance d'emmagasinage est raccordé un circuit d'appareil (24) présentant une charge dynamique.

4. Bloc d'alimentation à commutation selon l'une des revendications précédentes, caractérisé par le fait que comme information de réglage pour le réglage de la tension du bloc d'alimentation à commutation, on tire une tension de l'un des circuits d'appareil (24, 26) raccordés aux prises de la bobine, mais non du circuit d'appareil à charge dynamique raccordé à la prise (A) la plus proche de l'entrée de la bobine.

Fig.1

Fig. 2

Fig. 3

Fig. 4

Fig. 4a

Fig. 4b

Fig. 4c